Europäisches Patentamt

European Patent Office

Office européen des brevets

(19)

(11) Publication number: **0 048 602**

**A1**

(12) **EUROPEAN PATENT APPLICATION**

(21) Application number: **81304293.4**

(22) Date of filing: **18.09.81**

(51) Int. Cl.³: **B 60 K 35/00**
**B 62 D 25/14**

(30) Priority: **18.09.80 GB 8030167**

(43) Date of publication of application:
**31.03.82 Bulletin 82/13**

(84) Designated Contracting States:
**DE FR IT NL SE**

(71) Applicant: **MOTOR PANELS (COVENTRY) LIMITED**
**Holbrook Lane**
**Coventry CV6 4AW(GB)**

(72) Inventor: **Taylor, Merrick Wentworth**
**72 Birches Lane**
**Kenilworth Warwickshire(GB)**

(72) Inventor: **Strong, Terence**
**5 Grange Avenue**
**Finham Coventry(GB)**

(74) Representative: **Stonehouse, Sidney William et al,**
**Barker, Brettell & Duncan 138 Hagley Road Edgbaston**
**Birmingham B16 9PW(GB)**

(54) Vehicle instrument panel.

(57) Instruments (9, 11, 12, 13, 15) for a vehicle are carried by a mounting arm or arms (14, 16) on a rail (4) adapted to be supported transversely of the vehicle. The connection between the rail and the or each mounting arm (14, 16) enables ready assembly, and removal for maintenance and replacement, of the instruments on the rail, and enables the mounting arm to be set at various positions on the rail to adjust the positions of the instruments. In one form of connection the rail, comprising a tube, has a slot (5) running along its length through which a screw (18) passes which retains a mounting pad (17) of the mounting arm (14, 16) to an anchor block (6) inserted in the tube through an enlarged portion of the slot and moved to the required position of use. Several instruments may be grouped together and connected for support by a common mounting arm, the connections being releasable and providing a path for signals to the instruments.

./...

EP 0 048 602 A1

FIG.1.

FIG. 3.

## VEHICLE INSTRUMENT PANEL

This invention is concerned with vehicle instrument panels and vehicles fitted therewith.

Motor vehicles are generally provided with a fascia panel, often a plastic moulding, in which the various instruments and switches required are fitted. Different models of the same basic vehicle may be provided with different instrumentation and the fascia panel has to be designed with these variants in mind. Indeed it may be necessary to tool up for more than one fascia panel for the same basic vehicle in order to accommodate variations in instrumentation which are specified, for example for different overseas markets. This is expensive and furthermore it is a time consuming, and therefore expensive, operation to fit and connect up the various instruments switches and the like (hereinafter referred to as instruments) during vehicle building. Replacement of a faulty instrument also tends to be an expensive matter because the general inaccessibility to the instrument in the fascia panel makes the replacement a time consuming operation.

The present invention consists in an instrument panel for a vehicle which is characterised by a rail adapted for mounting transversely of the vehicle, at least one instrument mounting arm, co-operating means on the rail and the mounting arm whereby the mounting arm is mounted on the rail and located at a desired position therealong, an instrument and means whereby the instrument is connected to the mounting arm to be supported thereby.

The rail and the mounting arm may be provided with mutually inter-engaging formations whereby the mounting arm is adjustable along the rail. The formations may define the orientation of the mounting arm relative to the rail.

The rail may carry a plurality of the mounting arms by means of which a plurality of instruments may be carried by the rail.

The instruments may be designed so that adjacent instruments have co-operating parts by which they are connected for common support by the mounting arm, or one of the mounting arms, and which co-operating parts provide a path for passage of signals for the instruments, the signals entering one of the instruments and the signal or signals for the other instrument or instruments, as the case may be, passing through the preceding instrument or instruments to the instrument for which it is or they are intended. The co-operating parts may include multi-pin and socket connectors.

Provision may be made for easy access to one or both ends of the rail to facilitate fitting and replacement of the instrument or instruments.

The rail may include a bearing support for a steering column of the vehicle.

The invention also resides in a vehicle fitted with an instrument panel as set out hereinbefore.

An embodiment of the invention will now be described by way of example with reference to the accompanying drawings in which:-

Figure 1 is a perspective view of the inside of a vehicle cab from one side and facing forwards showing an instrument panel according to the invention,

Figure 2 is a front view of an end part of a modified form of the instrument panel, and

Figure 3 is a section through a rail of the instrument panel of Figure 2 showing a mounting arm and an instrument mounted on it.

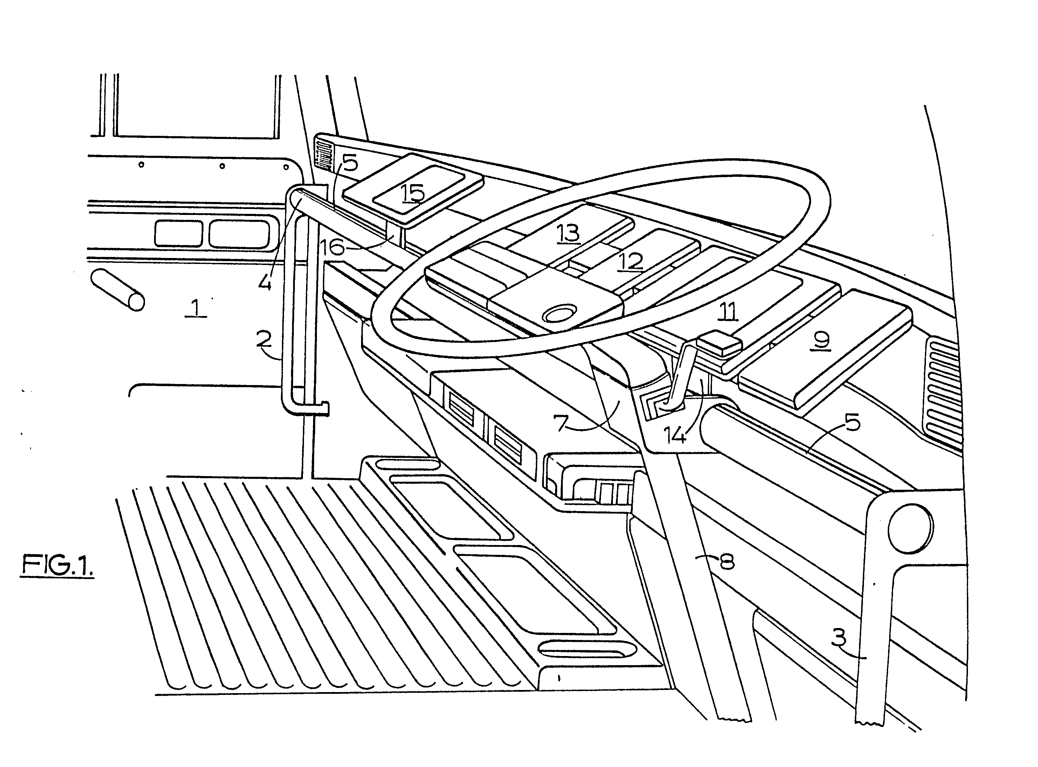

Referring to Figure 1, the inside of the left hand door 1 of a right-hand drive vehicle cab is shown, adjacent to the front of which a support member 2 is securely carried by the cab body. A similar support member 3 is provided on the other side of the cab. A tubular rail 4 is of a length to fit between the support members 2, 3. The rail is aligned with holes in the top of the support members 2, 3 and is secured thereto by end plugs.

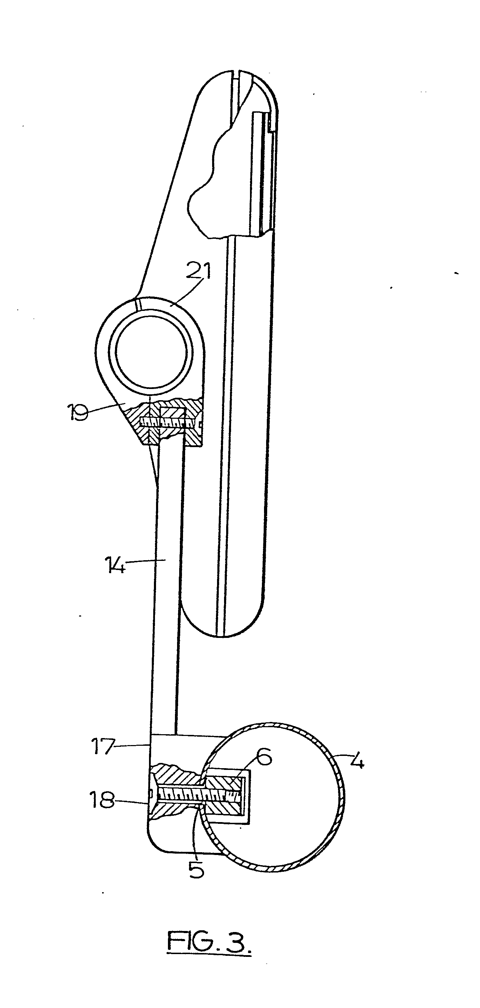

The rail 4 has a slot 5 running along its length. The slot 5 is enlarged at each end of the rail to permit insertion of an anchor block 6, Figure 3. A bearing support 7 for the steering column 8 is carried by the rail 4 intermediate its ends. A group of four instruments 9, 11, 12 and 13 is carried by mounting arms 14, only one of which is seen in Figure 1, which are secured to the rail 4, as will be described with reference to Figure 3. The rail also carries a single instrument 15 mounted on a mounting arm 16.

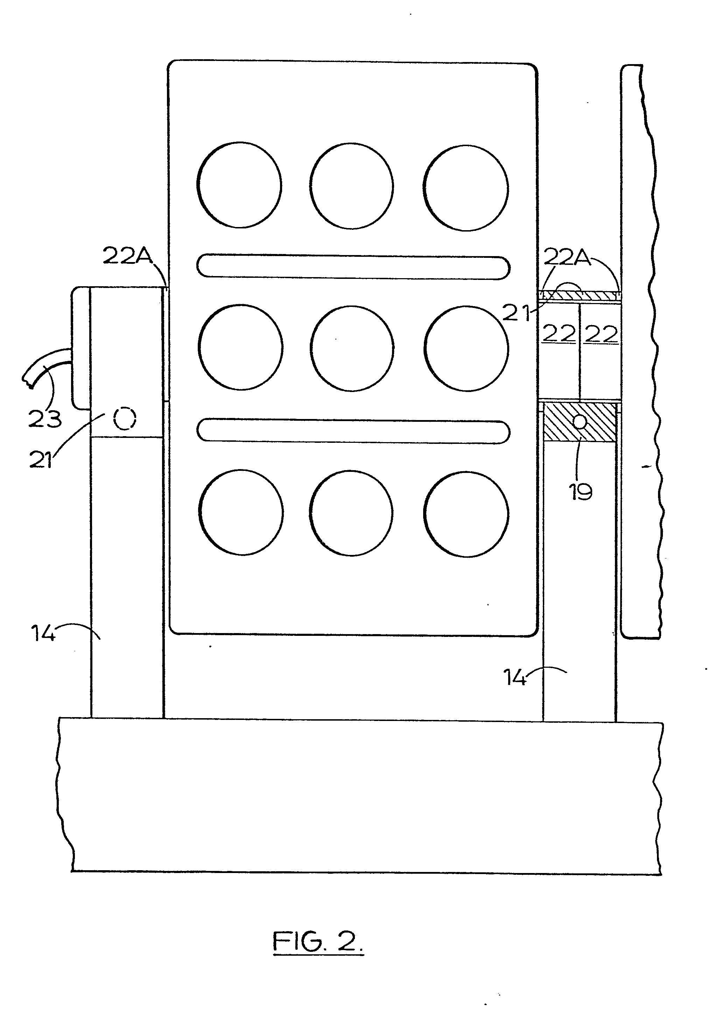

. Mounting arms having two different means for carrying instruments are shown in Figure 1 and in Figures 2 and 3 respectively.

4

Referring now to Figures 2 and 3, each mounting arm 14 has a mounting pad 17 at its lower end. A screw 18 passing through the mounting pad 17 carries an anchor block 6. The screw is slackened to allow the anchor block 6 to be entered into the slot 5 at the enlarged part thereof and moved along the slot to a desired position for the mounting arm. The screw 18 is then tightened to secure the mounting arm in the desired location. The mounting pad 17 is contoured to engage the rail over a sufficient arc and length of the rail to provide a secure mounting and define the orientation of the mounting arm relative to the rail. The mounting pad and anchor block may be secured together by more than one screw. The mounting arm 14 extends from the mounting pad and carries a two-part clamp 19, 21 at its upper end. This is clamped around a trunnion 22 at one side of the instrument, as best seen on Figure 2. The trunnion and clamp mounting enables the instrument to be clamped at any convenient angle. Furthermore, as seen in Figure 2, the mounting arms are accommodated between adjacent instruments where the instruments are grouped together. Washers, for example nylon washers 22A, may be fitted between the instruments and the clamps.

The trunnions of adjacent instruments may incorporate multi-pin and socket connectors so that a single multicore electric wire feed 23 may provide the signal input to a plurality of the instruments. In this way signals may be fed through a group of the instruments to the instrument or instruments for which they are intended.

In an alternative construction which is additionally shown in Figure 1 one or more instruments, for example 9, may be provided as a module which plugs into and may receive its signals through one of the instru-

ments 11. The module instrument 9 is therefore supported with the instrument 11 by the latter's mounting
arm. Accordingly it will be appreciated that it is not
necessary for individual instruments to have separate
supporting mounting arms.

The trunnion and clamp type mounting described with
reference to Figures 2 and 3 differs from that shown
diagrammatically in Figure 1. In the latter the instruments may be bolted at a fixed angle to the mounting
arms, or provision may be made for varying the inclination, if desired, in a similar manner to that provided
in the construction of Figures 2 and 3, for example by
trunnions at the rears of the instruments.

Provision may be made for rotating the rail so that
it presents the slot at a desired orientation for
mounting of the mounting arms. Provision may be made
for locking the rail so that it cannot rotate once the
slot has been presented at a desired orientation. Its
support member 2, and the support member 3, can conveniently be used as a grab handle to facilitate entry
of a person into the cab.

Individual signal inputs to the instruments may be
provided if desired.

It will be appreciated that the fitting of an array
of selected instruments in accordance with the present
invention may be accomplished easily and quickly and
without requirements for tooling of a fascia panel.
Maintenance and replacement are similarly readily
facilitated by the frontal access provided to the
securing screws for the two-part clamps 19, 21.
Similarly the securing screws 18 for the mounting arms
are readily accessible, for example as is the case with
the mounting arm 16. In other cases the securing screws are readily accessible following the relatively simple and quick operation of removal of an instrument, if necessary. The enlarged portion of the slot 5 at each end of the rail facilitates removal of the mounting arms without any need to disturb the mounting of the rail or the steering column bearing support 7. Fascia panels are generally complex mouldings which necessarily have to be made to a high degree of accuracy and also make mandatory a correspondingly high degree of accuracy in the cab interior where the panel is fitted. The instrument panel of the present invention provides greater flexibility and does not necessarily require a high degree of accuracy and corresponding expense in the cab interior.

## CLAIMS

1.  An instrument panel for a vehicle characterised by a rail (4) adapted to be mounted transversely of the vehicle, at least one instrument mounting arm (14, 16), co-operating means (5, 6, 17) on the rail (4) and mounting arm (14, 16) whereby the mounting arm (14, 16) is mounted on the rail (4) and located at a desired position therealong, an instrument (9, 11, 12, 13, 15) and means (19, 21) whereby the instrument (9, 11, 12, 13, 15) is connected to the mounting arm (14, 16) to be supported thereby.

2.  An instrument panel according to Claim 1 characterised in that the rail (4) and mounting arm (14, 16) are provided with mutually inter-engaging formations whereby the mounting arm (14, 16) is adjustable relative to the rail.

3.  An instrument panel according to Claim 2 characterised in that the rail (4) comprises a tube formed with a slot (5).

4.  An instrument panel according to Claim 3 characterised in that the slot (5) has an enlarged portion through which a mounting arm anchoring member (6) forming part of the co-operating means (5, 6, 17) is introduced into the rail (4).

5.  An instrument panel according to any preceding claim characterised in that there is a plurality of said instruments (9, 11, 12, 13) adjacently mounted on and carried by the mounting arm (14), or one of the mounting arms (14), the instruments (9, 11, 12, 13) having co-operating parts (19, 21, 22) by which they are connected for common support by the mounting arm (14) and which co-operating parts (19, 21, 22) provide a path for passage of signals for the instruments (9, 11, 12, 13), the signals entering one of the instruments and the signal or signals for the other instrument or instruments, as the case may be, passing through the preceding instrument or instruments to the instrument for which it is or they are intended.

6. An instrument panel according to any of Claims 1 to 4 characterised in that there is a plurality of the mounting arms (14, 16) each connected to at least one instrument (9, 11, 12, 13), and the instruments are adjacently mounted and have co-operating parts (19, 21, 22) whereby an input of signals for the instruments may enter one of the instruments and the signal or signals for the other instrument or instruments, as the case may be, pass through the preceding instrument or instruments to the instrument for which it is or they are intended.

7. An instrument panel according to any preceding claim characterised in that the means (19, 21) whereby the instrument (19, 11, 12, 13), or any one of the instruments, is connected to the mounting arm (14) to be supported thereby is adapted to permit pivotal adjustment of the instrument (19, 11, 12, 13) relative to the arm (14).

8. A vehicle characterised in that it is fitted with an instrument panel as claimed in any preceding claim.

9. A vehicle according to Claim 8 characterised in that the rail (4) is carried between support members (2, 3) secured to structural parts of the vehicle at or adjacent each side thereof.

10. A vehicle according to Claim 9 characterised in that the rail (4) carries a bearing support (7) for a steering column (8) of the vehicle.

FIG.1.

1/3

0048602

0048602

2/3

FIG. 2.

0048602

3/3

FIG.3.

0048602

## DOCUMENTS CONSIDERED TO BE RELEVANT

| Category | Citation of document with indication, where appropriate, of relevant passages | Relevant to claim |
|---|---|---|
| A | GB - A - 771 706 (DAIMLER-BENZ) | |

-----

**CLASSIFICATION OF THE APPLICATION (Int. Cl.³)**

B 60 K 35/00
B 62 D 25/14

**TECHNICAL FIELDS SEARCHED (Int. Cl.³)**

B 60 K
B 62 D
B 60 R
B 60 Q

**CATEGORY OF CITED DOCUMENTS**

X: particularly relevant
A: technological background
O: non-written disclosure
P: intermediate document
T: theory or principle underlying the invention
E. conflicting application
D: document cited in the application
L. citation for other reasons

&: member of the same patent family.
corresponding document

The present search report has been drawn up for all claims

| Place of search | Date of completion of the search | Examiner |
|---|---|---|
| The Hague | 05-01-1982 | PIRIOU |